# EUROPEAN PATENT APPLICATION

(11) **EP 1 458 081 A2**
(43) Date of publication of application: **15.09.2004**
(21) Application number: 04005287.0
(22) Date of filing: 05.03.2004
(51) Int. Cl.: H02K 21/24

(54) **Electric motor of the permanent-magnet type**

(30) Priority: 14.03.2003 IT PD20030020 U
(71) Applicant: FINVETRO S.P.A., 35043 Monselice (Padova) (IT)
(72) Inventor: Rossini, Mauro, 35042 Este (Prov. of Padova) (IT)
(74) Representative: Modiano, Guido, Dr.-Ing.

(57) **Abstract**

An electric motor of the permanent-magnet type, comprising a permanent-magnet rotor (11) that is interposed in an axial direction between two stator portions (12, 12a), each of which is formed by at least one electromagnetic component (13, 13a) provided with a winding (14, 14a) that is coaxial to the rotor (11). A pole shoe (17, 17a, 18, 18a) extends from each end (15, 15a, 16, 16a) of each one of the at least one electromagnetic component (13, 13a) and is suitable to form, together with the other corresponding pole shoes (17, 17a, 18, 18a), a cage (19) within which the rotor (11) is connected to a transmission shaft (20) that passes through, and protrudes from, at least one of the two stator portions (12, 12a).

## Description

The present invention relates to an electric motor of the permanent-magnet type.

Electric motors of the permanent-magnet step type are currently known.

In the wide variety of electric motors, these motors stand out thanks to a series of particularities that make them ideal for all applications requiring precision in angular motion and rotation rate, such as for example robotics and servomechanisms in general.

With these motors, for example, it is easy to make a shaft connected in output thereto perform small arbitrary angular rotations in both directions and lock it in a given position.

Moreover, the rotation rate can be kept very low even without using mechanical reduction units.

Electric motors with these characteristics are therefore well-suited to meet very particular requirements, such as for example the actuation of a Venetian blind arranged inside a sealed double-glazing unit.

Known solutions for this actuation provide for an electric motor that is arranged outside the sealed volume of the double-glazing unit and transmits the lifting, lowering and orientation motion to the lifting shaft of the Venetian blind by means of a magnetic coupling.

In these solutions, such electric motor can be arranged so as to face the glass pane of the double glazing unit or can be recessed hermetically in a comer element.

Although these solutions are highly appreciated commercially, they are not free from drawbacks.

One drawback is linked to the transmission of motion from the motor to the shaft of the blind by means of a magnetic coupling, which does not allow optimum control of rotation and of the rotation rate of said shaft.

In order to obviate this drawback, the entire electric motor, including any associated reduction units, has been inserted within the containment box of said lifting shaft, said box being in turn sealed hermetically between the glass panes that compose said double-glazing unit.

However, the structures of electric step motors applied to current double-glazing units with internally-sealed Venetian blind have dimensions that are not suitable for the volumes available in said boxes for lifting shafts, especially as regards the transverse dimensions.

The aim of the present invention is to provide an electric motor that is substantially axially elongated and has extremely compact transverse dimensions.

Within this aim, an object of the present invention is to provide an electric motor that can be accommodated conveniently in particular within said boxes for lifting shafts of a known type.

Another object of the present invention is to provide an electric motor that is capable of providing a performance that is at least not lower than that of known types.

Another object of the present invention is to provide an electric motor that is constructively simple and equally easy to assemble, with consequent low costs.

Another object of the present invention is to provide an electric motor that can be operated and managed by means of known types of electronic board.

An object of the present invention is to provide an electric motor that can be manufactured with known systems and technologies.

This aim and these and other objects that will become better apparent hereinafter are achieved by an electric motor of the permanent-magnet type, characterized in that it comprises a permanent-magnet rotor that is interposed in an axial direction between two stator portions, each of which is formed by at least one electromagnetic component provided with a winding that is coaxial to said rotor, a pole shoe extending from each end of each one of said at least one electromagnetic component, said pole shoe being suitable to form, together with the other corresponding pole shoes, a cage within which said rotor is connected to a transmission shaft that passes through, and protrudes from, at least one of said two stator portions.

Further characteristics and advantages of the present invention will become better apparent from the following detailed description of a preferred but not exclusive embodiment thereof, illustrated by way of nonlimiting example in the accompanying drawings, wherein:

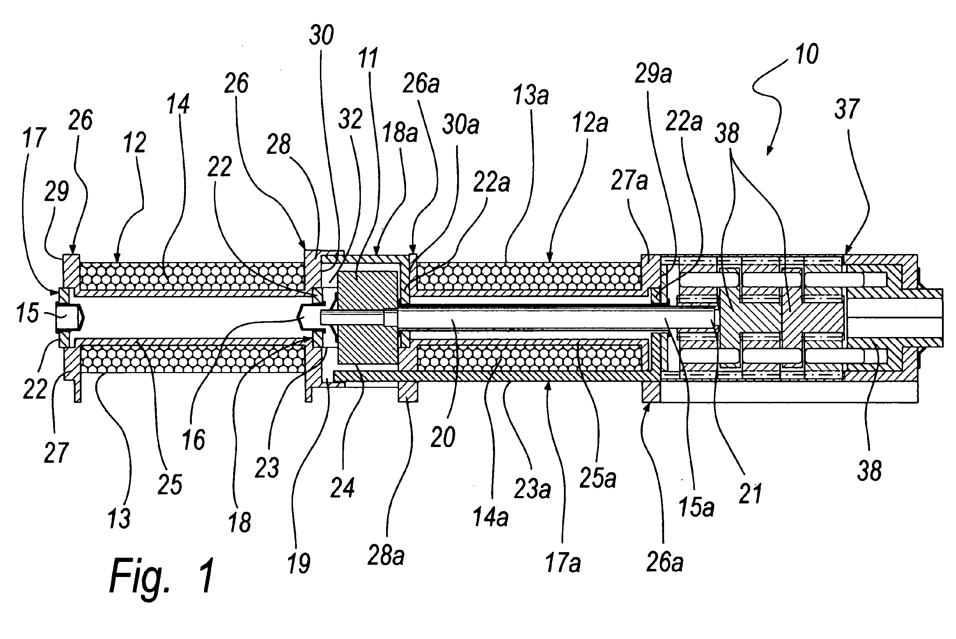

Figure 1 is a side view of a longitudinal cross-section, taken along a central plane, of an electric motor according to the invention;

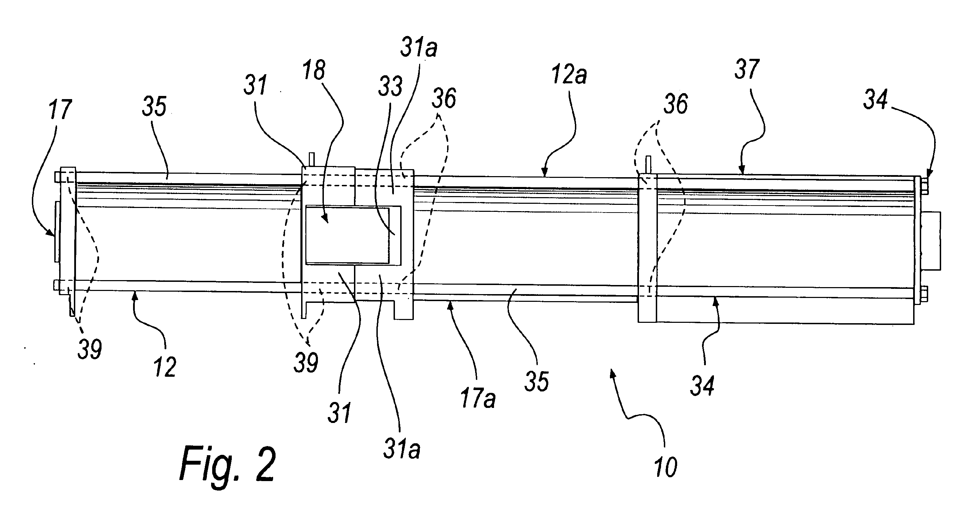

Figure 2 is a side view of an electric motor according to the invention;

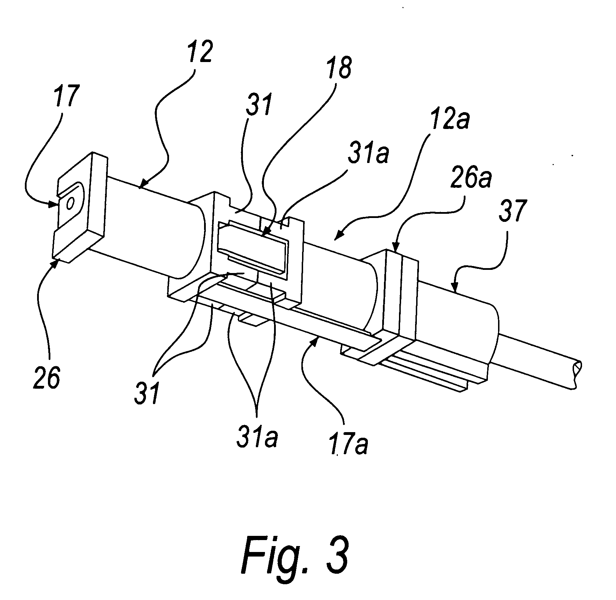

Figure 3 is a perspective view of an electric motor according to the invention.

With reference to the figures, an electric motor of the permanent-magnet type according to the invention is generally designated by the reference numeral 10.

The structure 10 comprises a permanent-magnet rotor 11, which is interposed in an axial direction between a first stator portion and a second stator portion, designated by the reference numerals 12 and 12a respectively.

Each one of the two stator portions 12 and 12a is formed by a first electromagnetic component 13 and a second electromagnetic component 13a.

Each one of the first and second electromagnetic components 13 and 13a comprises a winding, designated respectively by the reference numerals 14 and 14a, that is coaxial to the rotor 11.

A pole shoe extends from each one of the ends 15 and 16 of the first electromagnetic component 13 and from each one of the ends 15a and 16a of the second electromagnetic component 13a.

The pole shoes are four in total and are designated by the reference numerals 17 and 18 for the first electromagnetic component 13 and by the reference numerals 17a and 18a for the second electromagnetic component 13a.

The pole shoes 17, 17a, 18 and 18a form a cage 19, inside which the rotor 11 is connected to a transmission shaft 20.

The shaft 20 passes through the second electromagnetic component 13a and protrudes from it with a power take-off 21.

The pole shoes 17, 17a, 18 and 18a are constituted by laminas that have a substantially L-shaped profile.

Such laminas are formed by a first portion, designated by the reference numerals 22 and 22a respectively, for connection to the ends 15, 15a, 16 and 16a of the electromagnetic components 13 and 13a, and by a second portion, designated by the reference numerals 23 and 23a, that runs parallel to the rotation axis of the rotor 11 until it affects longitudinally the entire lateral surface 24 thereof.

In the first and second electromagnetic components 13 and 13a, each one of the corresponding windings 14 and 14a surrounds a tubular support, designated by the reference numerals 25 and 25a respectively.

Each one of the tubular supports 25 and 25a is provided with shoulders 26 and 26a for containing the windings 14 and 14a.

The shoulders 26 and 26a comprise a first shoulder 27 and 27a and a second shoulder 28 and 28a, which are substantially plate-like and are perforated at the axial openings of the tubular supports 25 and 25a.

The first and second shoulders 27 and 28 each have one of the connecting portions 22 of said pole shoes 17 and 18 fixed to a first face 29 and to a second face 30, without contact with the winding 14.

The same applies to a first face 29 and a second face 30a on the first and second shoulders 27a and 28a with respect to the connecting portions 22a of the pole shoes 17a and 18a.

Moreover, the second faces 30 and 30a also have comer protrusions 31 and 31a.

The second faces 30 and 30a, which are arranged so as to face each other axially, form, by means of the comer protrusions 31 and 31a, an internal receptacle 32 for the rotor 11 and peripheral receptacles 33 for end parts of the pole shoes 17, 17a, 18 and 18a.

The first and second stator portions 12 and 12a are connected to each other by way of threaded coupling means 34.

The threaded coupling means 34 are constituted by four tension elements 35, which pass through through holes 36 provided at the comers in the first shoulder 27a and second shoulder 28a of the second electromagnetic component 13a and are screwed into threaded holes 39 on the first shoulder 27 and the second shoulder 28 of the first electromagnetic component 13.

The electric motor 10 comprises a speed reduction unit 37 that is connected axially to the transmission shaft 20 by way of the power take-off 21.

The speed reduction unit 37 is constituted by a plurality of three epicyclic reduction units 38.

The operation of the electric motor is as follows.

The intensities of the current and voltage across the windings 14 and 14a are managed by way of an electric board or the like, not shown and of a known type.

The flow of electric current in the windings magnetizes the pole shoes 17, 17a, 18 and 18a.

The polarization that the laminas assume interacts, by means of the end portions of said laminas, with the permanent magnetic field of the rotor 11, causing the rotation of the rotor in the manners and with the speeds set by means of the electronic board or the like.

In practice it has been found that the invention thus described solves the problems noted above in known types of permanent-magnet electric motor.

In particular, the present invention provides an electric motor that is substantially axially elongated and has reduced transverse dimensions and in which the conventional pole shoes, whose windings are generally arranged so that their axis is perpendicular to the rotor axis, are provided by thin laminas that are magnetized by windings that are conveniently arranged coaxially with respect to said rotor axis but not concentrically.

Moreover, the present invention provides an electric motor that is particularly suitable to be accommodated in the confined transverse spaces of boxes for lifting shafts that are interposed in an upper region between two glass panes of a sealed double-glazing unit.

Moreover, the present invention provides an electric motor whose performance is not lower and whose costs are not higher than those of known types.

In practice, the materials employed, so long as they are compatible with the specific use, as well as the dimensions, may be any according to requirements and to the state of the art.

The disclosures in Italian Utility Model Application No. PD2003U000020 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric motor of the permanent-magnet type, **characterized in that** it comprises a permanent-magnet rotor (11) that is interposed in an axial direction between two stator portions (12, 12a), each of which is formed by at least one electromagnetic component (13, 13a) provided with a winding (14, 14a) that is coaxial to said rotor (11), a pole shoe (17, 17a, 18, 18a) extending from each end (15, 15a, 16, 16a) of each one of said at least one electromagnetic component (13, 13a), said pole shoe forming, together with the other corresponding pole shoes (17, 17a, 18, 18a), a cage (19) within which said rotor (11) is connected to a transmission shaft (20) that passes through, and protrudes from, at least one of said two stator portions (12, 12a).

2. The electric motor according to claim 1, **characterized in that** said pole shoes (17, 17a, 18, 18a) are constituted by laminas that have a substantially L-shaped profile.

3. The electric motor according to claim 2, **characterized in that** said laminas are constituted by a first portion (22, 22a) for connection to said ends (15, 15a, 16, 16a) of said electromagnetic components (13, 13a) and by a second portion (23, 23a) that lies parallel to the rotation axis of said rotor (11) until it longitudinally affects at least part of its lateral surface (24).

4. The electric motor according to claim 1, **characterized in that**, for each one of said electromagnetic components (13, 13a), said winding (14, 14a) surrounds a tubular support (25, 25a) that is provided with shoulders (26) for containing said winding (14, 14a).

5. The electric motor according to claim 4, **characterized in that** said shoulders (26) comprise, for each one of said tubular supports (25, 25a), a first shoulder (27, 27a) and a second shoulder (28, 28a), which are substantially plate-like and are perforated at openings of said tubular supports (25, 25a).

6. The electric motor according to claim 5, **characterized in that** in said first shoulder (27, 27a) said portion (22, 22a) for the connection of said pole shoe (17, 17a) is fixed to a face (29, 29a) that is not in contact with said winding (14, 14a).

7. The electric motor according to claim 5, **characterized in that** in said second shoulder (28, 28a) said portion (22, 22a) for the connection of said pole shoe (18, 18a) is fixed to a face (30, 30a) that is not in contact with said winding (14, 14a), said face (30, 30a) being also provided with comer protrusions (31, 31a) that are suitable to form part of an internal receptacle (32) for said rotor (11) and part of peripheral receptacles (40) for end parts of said second portions (23, 23a) of said pole shoes (17, 17a, 18, 18a).

8. The electric motor according to claim 7, **characterized in that** said receptacle (32) is provided by said comer protrusions (31, 31a) of said second shoulders (28, 28a) that are arranged so as to face each other axially, said end parts of said second portions (23, 23a) of said pole shoes (17, 17a, 18, 18a) being arranged between said protrusions (31, 31a) so as to form said cage (19).

9. The electric motor according to claim 1, **characterized in that** said transmission shaft (20) passes axially through one of said at least one of two stator portions (12, 12a).

10. The electric motor according to claim 1, **characterized in that** said stator portions (12, 12a) are connected to each other by way of threaded coupling means (34).

11. The electric motor according to claim 10, **characterized in that** said threaded coupling means (34) are constituted by four tension elements (35), which are arranged in through comer holes (36) provided in said first shoulders (27a) and second shoulders (28a) of one of said electromagnetic components (13a) and are screwed in threaded holes (39) on said first shoulders (27) and second shoulders (28) of the other one of said electromagnetic components (13).

12. The electric motor according to claim 1, **characterized in that** it comprises a speed reduction unit (37) that is axially engaged on said transmission shaft (20) that protrudes from said stator portion (13a).

13. The electric motor according to claim 12, **characterized in that** said speed reduction unit (37) is constituted by at least one epicyclic reduction unit (38).

14. The electric motor according to claim 13, **characterized in that** it has in series three of said at least one epicyclic reduction units (38).
